# EUROPEAN PATENT SPECIFICATION

(11) **EP 0 652 138 B1**
(45) Date of publication and mention of the grant of the patent: **26.01.2000**
(21) Application number: 94308127.3
(22) Date of filing: 03.11.1994
(51) Int. Cl.: B60R 19/18

(54) **Blow molding bumper beam**
Stossfänger aus Blasformverfahren
Pare-choc par extrusion-soufflage

(30) Priority: 05.11.1993 JP 27666893; 28.02.1994 JP 3006094
(43) Date of publication of application: 10.05.1995
(73) Proprietor: IDEMITSU PETROCHEMICAL CO. LTD., Tokyo 100 (JP)
(72) Inventor: Sugawara, Minoru, c/o Idemitsu Petrochem. Co., Ltd, Ichihara-shi, Chiba-ken (JP); Tomomatsu, Ryuzo, c/o Idemitsu Petrochem. Co., Ltd, Ichihara-shi, Chiba-ken (JP); Fukuda, Takumasa, c/o Idemitsu Petrochem. Co., Ltd, Ichihara-shi, Chiba-ken (JP); Nomura, Manabu, c/o Idemitsu Petrochem. Co., Ltd, Ichihara-shi, Chiba-ken (JP)
(74) Representative: Jackson, Peter Arthur

(56) References cited:
- EP-A- 0 256 174
- EP-A- 0 270 691
- EP-A- 0 272 334
- DE-A- 3 209 464
- FR-A- 2 536 711
- PATENT ABSTRACTS OF JAPAN vol. 17, no. 18 (M-1352) 13 January 1992 & JP-A-04 244 451 (FUKUHARA) 1 September 1992

## Description

This invention relates to a bumper beam obtained by a blow molding method and this is particularly used for a rear bumper beam of an automobile and others.

A bumper beam made from metal like mainly steel and others had been used for the bumper beam of an automobile, however lightening and corrosion prevention are difficult for the steel and others and therefore a plastic bumper beam has been used recently. A construction which accomplishes the lightening and an improvement of a strength is required in this plastic bumper beam and the applicant has already proposed the bumper beam described in Japanese Patent Application Laid-open No. 4-120145, Japanese Patent Application Laid-open No. 4-126755 and Japanese Patent Application Laid-open No. 5-92744 as the bumper beam which can be molded easily and integrally by a blow molding with a rib construction (a cross sectional construction) improving the strength without an increase of a weight like thickening a wall thickness.

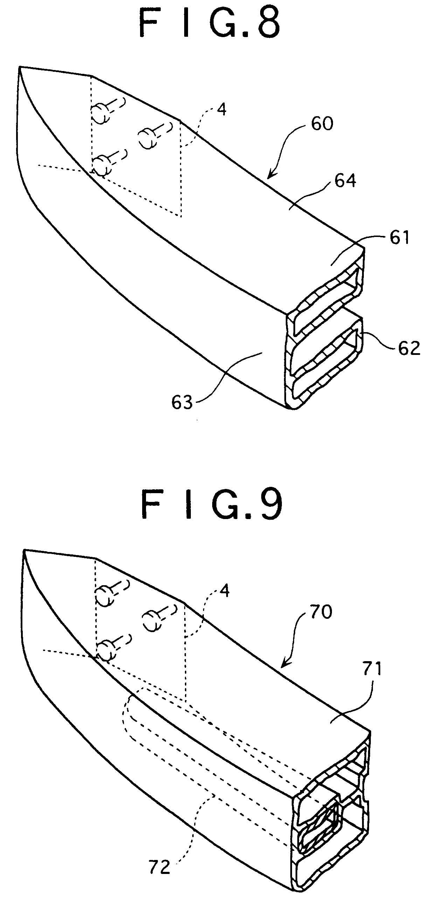

The bumper beam 60 the applicant proposed is shown in Fig. 8. The bumper beam 60 consists of only a bumper beam body 64 of sectionally C-shape whose front side edge (a face against an automobile fitting face when the bumper beam is attached to the automobile) of an upper frame portion 61 and a lower frame portion 62 which have a hollow portion inside are connected by a side edge portion. This bumper beam 60 was provided with the sufficient strength for a front bumper beam of the automobile, but when it was used for a rear bumper beam which required more strength than the front, the strength needed to be improved by thickening the wall thickness of the bumper beam 60, whereby a problem of increasing the weight occurred. In order to meet the demand of the safety, the rear bumper beam was required to pass a strict test, that is 5 miles / hour pole test (a deformation quantity of the bumper beam is measured when the automobile with the bumper beam collided with a metal pole by 5 miles / hour) and there was a problem to make a big increase of the weight in order that the bumper beam 60 passed this test.

On the other hand, the bumper beam whose strength was improved by inserting a reinforcing member of the same material as the bumper beam body into the bumper beam body obtained by the blow molding method was described in Japanese Patent Application Laid-open No. 5-445 and Japanese Patent Application Laid-open No. 2-299948.

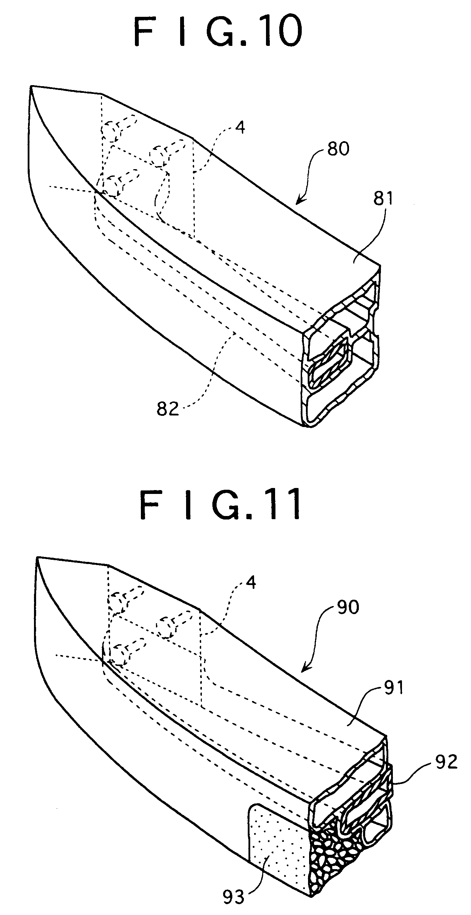

A conventional bumper beam 70 into which a reinforcing member 72 as shown in Fig. 9 was inserted was short of the strength to pass the very strict test like 5 miles / hour pole test, whereby the weight of the bumper beam 70 needed to be increased. Therefore, the bumper beam which can pass 5 mile / hour pole test and in which the increase of the weight is reduced has been required.

Further, not only in the bumper beam but also in the blow molding products, the blow molding products which can accomplish the high strength and the lightening have been required.

An object of this invention is to provide with the bumper beam for the blow molding, which accomplish the high strength and the lightening and can pass 5 miles/ hour pole test requiring the high level of the strength.

EP-A-0256174 discloses a bumper beam comprising a rigid bumper beam body and a bumper beam reinforcing member provided inside the bumper beam body, the bumper beam body having a longitudinally extending section with fitting members provided at opposite ends thereof for joining the blow molded bumper beam to an automobile body and the bumper beam reinforcing member contacts the fitting members and extends along the length of the bumper beam body longiduinally extending section for a distance greater than the distance between the fitting members.

According to the present invention, such a beam is characterised in that the reinforcing member is completely surrounded by the bumper beam body for substantially all of the length of the reinforcing member; and in that the bumper beam body is formed by blow molding.

In this invention, the reinforcing member is inserted into the bumper beam to produce a light strong bumper beam.

As the reinforcing member has a longitudinal dimension which is longer than the distance between the fitting members, a load on the bumper beam is transmitted through the reinforcing member to the fitting members, and the bumper beam main body accepts less of the load. As a result of the above, it is not necessary to increase the strength by thickening the wall thickness of the bumper beam main body and the lightening of the whole bumper beam can be accomplished.

Because the reinforcing member is surrounded by the bumper beam main body, the reinforcing member and the bumper beam main body cope with the load by enforcing each other, the strength of the whole bumper beam improves.

In this invention, because the strength of the whole bumper beam improves by a constructional establishment, it is not necessary to improve the strength by thickening the wall thickness of the bumper beam main body and the reinforcing member (by increasing the weight) and the strength enough to pass the pole test can be insured.

The cross section of the above mentioned reinforcing member is not particularly limited. However, for example, substantially square, rectangular, or trapezoidal cross sections are preferable.

Materials for the bumper beam main body and the reinforcing member are not particularly limited. However, for example the main body is resin composition consisting of polypropylene type resin 60-99 wt% whose melt index is 0.1-3 g/10 minutes and talc 1-30 wt% whose average particle diameter is less than 10 µm and average aspect ratio is 3-20 is preferable. HDPE (high density polyethylene) in the range of 1 to 10 wt% and elastomer like ethylene-propylene elastomer in the range of 1 to 30 wt% can be mixed with this composition.

There is no particular limitation for the reinforcing member, which accepts resin products and the resin's kind is not limited particularly, either. Thermoplastic resin is general, but glass fibre reinforced thermo setting resin (GFRP) is acceptable for the resin. The thermoplastic resin similar to the bumper beam main body is preferable. The resin reinforced by contaminating the glass fibre is also ideal. It is preferable that the reinforcing member is molded by using the pellet complexed with the glass fibre, whose length is substantially the same as that of the pellet, and the resin whereby the glass fibre is contaminated into the reinforcing member and a damage of the glass fibre becomes less.

For example, the reinforcing member is composed of mixtures consisting of (A) the pellet 5-70 by weight which consists of propylene homopolymer or propylene-ethylene copolymer 20-60 wt% and glass fibre 80-40 wt% and whose length is 2-20 mm and is substantially the same as a length of the glass fibre, (B) propylene homopolymer or propylene-ethylene copolymer 95-30 by weight, or (A') the pellet 5-70 by weight which consists of a mixture of acid modified polyolefin 1-10 by weight of acid addition weight 0.1-10 wt% against a mixture 100 by weight consisting of propylene homopolymer or propylene-ethylene copolymer 20-60 wt% and glass fibre 80-40 wt% and (B) propylene homopolymer or propylene-ethylene copolymer 95-30 by weight. On this occasion, it is ideal that the melt index [230 °C, 2.16 kgf] of the above-mentioned the propylene homopolymer or propylene-ethylene copolymer of (A) or (A') components respectively is more than 300 g / 10 minutes and the melt index [230 °C, 2.16 kgf] of the propylene homopolymer or the propylene-ethylene copolymer of (B) component is 3-20 g / 10 minutes and an isotactic pentad ratio of (B) component is more than 93 mol %.

In the accompanying drawings:
Figure 1 is a perspective view showing a half of a bumper beam in the first embodiment of this invention;
Figure 2 is a top view of the bumper beam in an embodiment of Figure 1;
Figure 3 is an enlarged sectional view taken along the 3-3 line in Figure 2;
Figure 4 is a front view of Figure 1,
Figure 5 is a enlarged sectional view taken along the 5-5 line of Figure 4;
Figure 6 is a perspective view showing a half of a reinforcing member utilized in the embodiment of Figure 1;
Figure 7 is an explanatory drawing showing a producing process of the bumper beam in the embodiment of Figure 1;
Figure 8 is a perspective view showing a half of a conventional example of this invention (a control example 1 in an experimental example I);
Figure 9 is a perspective view showing a half of the bumper beam of other conventional example (a control example 2 in the experimental example I) of this invention;
Figure 10 is a perspective view showing a half of the bumper beam in a control example 3 in the experimental example I of this invention;
Figure 11 is a perspective view showing a half of the bumper beam of a control example 4 in the experimental example I of this invention;
Figure 12 is an explanatory drawing showing a compressing test condition of the bumper beam in an experimental example II of this invention; and
Figure 13 is a perspective view showing a schematic construction of a compression pole section utilized for a compression test apparatus in Figure 12.

The preferred embodiment of the present invention will now be described will the reference to the drawings.

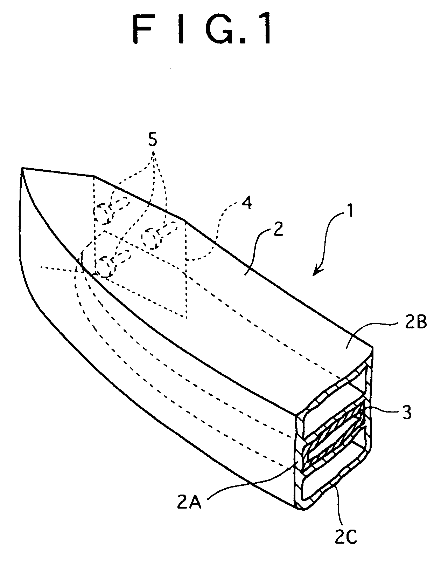

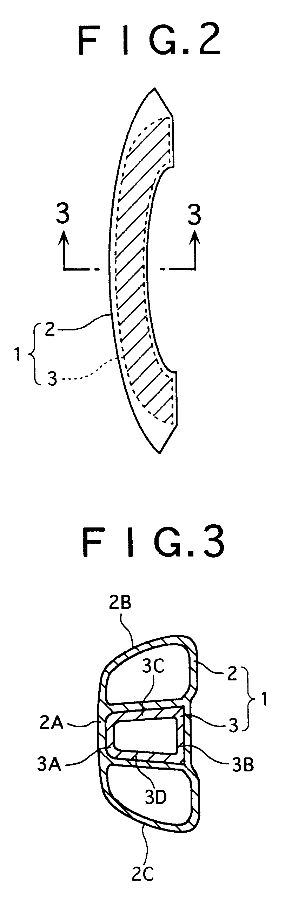

Figure 1 shows almost half construction of a bumper beam 1 in this embodiment. Figure 2 shows a top view of the bumper beam and Figure 3 shows a cross sectional construction in which the bumper beam is severed perpendicularly to a longitudinal axis.

The bumper beam 1 is provided with a bumper mean main body 2 forming a main visual form of mold and a reinforcing member 3 formed inside of this main body 2.

As shown in Figure 2, the bumper beam main body 2 is bent into a convex bow in a way which a longitudinal axis faces a front side (a side against a fitting side, a front side when attached to an automobile body (not shown) as a front bumper and a rear side of an automobile when attached to an automobile body as a rear bumper).

As shown in Figure 3, the cross section severed perpendicularly to a longitudinal axis of the main body 2 is supplied with a coated portion 2A of almost a square frame covering a surface of the reinforcing member 3 and an upper frame portion 2B and an lower frame portion 2C provided on and under the coated portion 2A and formed into almost a square frame (a hollow) including a portion of the coated portion 2A.

The reinforcing member 3 formed as an insert molding inside the bumper beam main body 2 is molded by a blow molding. This reinforcing member 3 is extendedly arranged, stretching the almost full length of the body 2, into a bowed condition like the main body 2 and the cross section face severed perpendicularly to a longitudinal axis of the reinforcing member 3 is almost a trapezoidal hollow. That is, as shown in Figure 3, the reinforcing member 3 is that a front side 3A (a face side against a fitting face of an automobile) is shorter than a back side 3B (a fitting face of an automobile) and the front side 3A and the back side 3B are formed integrally as connecting the both ends of the front side 3A and the back side 3B by slants (upper and lower) inclining a little against a vertical direction.

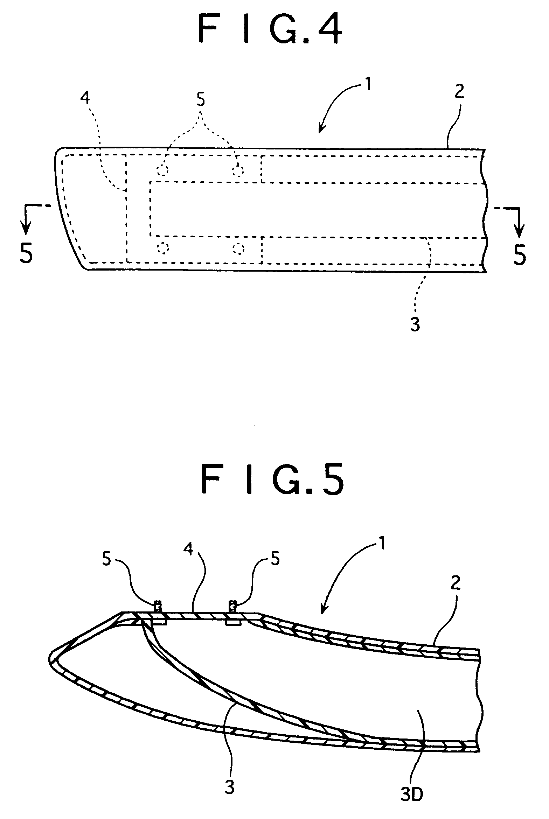

As shown in Figure 4 to 6, stays 4 for connecting to au automobile body are respectively situated at both ends of the reinforcing member 3. These stays 4 are formed by metal, resin, or others, fixed by plural bolts, for example, three bolts 5 integrally, and easily attach the bumper beam 1 to an automobile body (not shown).

Various polypropylene or all sorts of resin which can be purchased as a grade for blow molding can be used for the bumper beam main body 2 and the reinforcing member 3 and it is preferable to utilize blow molding materials which are light and possess high mechanical strength, remarkable endurance and impact properties.

A mixture (A + B or A' + B) combined with (A) the pellet 10-70 by weight which consists of propylene homopolymer or propylene-ethylene copolymer 20-60 wt% and glass fiber 80-40 wt% and whose length is 2-20 mm and is substantially the same as that of the glass fiber, (A') the pellet 10-70 by weight which consists of a mixture of acid modified polyolefin 1-10 by weight of acid addition weight 0.1-10 wt% against a mixture 100 by weight consisting of propylene homopolymer or propylene-ethylene copolymer 20-60 wt% and glass fiber 80-40 wt%, and (B) propylene homopolymer or propyleneethylene copolymer 90-30 by weight can be enumerated as a formation material of the reinforcing member.

In this case, a mixture utilized for forming a reinforcing member consists of pellet-state resin composition of the component (A) or (A') and the resin of the component (B) and it is preferable to use the propylene homopolymer or the propylene-ethylene copolymer whose melt index (M I) (230 C, 2.16 kgf) is more than 300g / 10 minutes, more than 400g / 10 minutes is more preferable. Saturation properties of the resin is in short if MI is less than 300g / 10 minutes and when production is raised, dispersion properties of the glass fiber become delinquent and the fiber is broken when being melt-mixed. It is preferable to use the propylene homopolymer or the propylene-ethylene copolymer whose melt index (230 °C, 2.16 kgf) is 3-20g / 10 minutes and isotactic pentad ratio is more than 93 mol %.

Crystalline propylene-ethylene block copolymer is desirable for the above-mentioned propylene-ethylene copolymer. The crystalline propylene-ethylene block copolymer on the market containing copolymerization composed of the ethylene propylene-random copolymer whose content of usual ethylene unit is a little, for example approximately 0.01-2 wt%, or homopolymerization composed of the propylene homopolymer and copolymerization composed of the ethylene-propylene random copolymer whose content of the ethylene unit is referencely high, for example approximately 10-70 wt% can be utilized as this propylene-ethylene block copolymer. This propylene-ethylene block copolymer can be the above-mentioned homopolymerization or copolymerization which contains α -olefin unit like butene-1 and others in the suitable proportion.

Included alkali glass, low alkali glass or free-alkali glass can be utilized as the glass fiber for (A) component or (A') component and roving is desirable for the form. This glass fiber can be treated by suitable finishing agent.

Shiran-, titanate-, aluminum-, chrome-, zirconium-, boran-coupling agent and others can be listed as the finishing agent and shiran-coupling agent and titanate-coupling agent are preferable among the above and especially, the shiran-coupling agent is most preferable.

For example, triethoxysilane, vinyltris( β -methoxyethoxy) silane, γ - methacryloxypropyltrimethoxysilane, γ -glycidoxypropyltrimethoysilane, β -(3, 4-epoxycyclohexyl) ethyltrimethoxysilane, N- β -(aminoehyl)- γ -aminopropyltrimethoxysilane, N- β -(aminoethyl)- γ -aminopropylmethyldimethoxysilane, γ -aminopropyltriethoxysilane, N-phenyl- γ aminopropyltrimethoxysilane, γ methocaptopropyltrimethoxysilane, γ -chloropropyltrimethoxysilane and others can be listed as this shiran-coupling agent. The γ -aminopropyltriethoxysilane and the N-β -(aminoehyl)-γ -aminopropyltrimethoxysilane are ideal among these.

A way to treat the glass fiber by the above-mentioned finishing agent is not limited and an optional way like a conventionally usual way, for example aqueous solution, organic solvent, spraying means or others can be used.

Glass roving converging the glass fibers whose surface is usually treated and average fiber diameter is 3-20 µ m by suitable greige goods is used. Urethane-, acrylic-, butadiene-, epoxy-greige goods and others can be utilized for this greige goods and the urethane-greige goods is most ideal among these. This urethane-greige goods usually contains more than 50 wt% of polyisocyanate obtained by polyaddition reaction of usual diisocyanate compound and polyhydroxy alcohol and has one-solution type like oildenaturation-type, moisture curing type, block type and others and two-solution type like catalyst curing type, polyol curing type and others and these can be used.

It is necessary that 20-60 wt% of the above-mentioned propylene homopolymer or propylene-ethylene copolymer and 80-40 wt% of the glass fiber respectively be conjugated It would be difficult to draw out and it would be disadvantage economically if the glass fiber is below 40 wt% and saturation properties of the resin would deteriorate and dispersion properties of the glass fiber would occur if the glass fiber exceeds 80 wt%.

To increase the strength of a secured glass fiber reinforced polyolefin resin reinforcing member further, carboxylic acid modified polyolefin may be compounded further to the mixture of the above-mentioned resin component and glass fiber if it is necessary in a conjugation of polymer and glass fiber used for the reinforcing member 3. Polypropylene, polyethylene, ethylene- α -olefin copolymer rubber, ethylene-α -olefin-nonconjugated diene composition copolymer (for example, EPDM and others), ethylene-aromaticmonovinyl composition-conjugated diene composition copolymerizate rubber and others can be used as polyolefin utilized for this acid modified polyolefin. Propylene, butene-1, pentene-1, hexene-1, 4-methylpentene-1 and others can be enumerated as the previous α -olefin and one of these or more than two of these may be blended. The homopolypropylene and the polyethylene are desirable among these polyolefins.

Further, unsaturated carboxylic acid and derivative can be enumerated as carboxylic acid used for modification, acrylicacid, methacrylic acid, maleic acid, fumaric acid, itaconic acid, crotonic acid, citraconic acid, sorbic acid, mesaconic acid, angelica acid and others can be enumerated as this unsaturated carboxylic acid, and this derivative has acid anhydride, ester, amido, imide, metallic salt and others, for example maleic anhydride, itaconic acid, citraconic anhydride, methyl acrylate, methyl methacrylate, ethyl acrylate, butyl acrylate, monoethylester maleate, acrylamide, monoamido maleate, maleimide, N-butyl maleimide, sodium acrylate, sodium methacrylate and others can be enumerated and especially maleic anhydride is desirable.

When the above-mentioned polyolefin is modified, one, or more than two of these unsaturated carboxylic acids and the derivatives can be blended and various means commonly known can be adopted because the denatural means is not particularly limited. A means in which, unsaturated carboxylic acid, or its derivative and radical generator are added to this polyolefin dissolved in suitable organic solvent, which is stirred and heated or a means in which graft copolymer is modified by supplying an extruder with the above-mentioned component can be adopted.

Acid addition of this acid modified polyolefin is selected in the range of 0.1 to 10 wt%. The improvement effect of strength is not given in full play when this acid addition is below 0.1 wt% and mechanical and impulsive strengths sometimes deteriorate because more acid is not easily added and if anything acid which is not added increases when this acid addition exceeds 10 wt%. One or more than two of these acid modified polyolefins can be used for combination and the use quantity is needed to be chosen in the range of 1 to 10 by weight against the mixture 100 by weight of the resin component and the glass fiber. The improvement effect of strength can not be given in full play when this quantity is below 1 by weight and the improvement effect of strength does not increase, if anything it is disadvantage economically, and additionally impulsive strength sometimes deteriorates when this quantity exceeds 10 by weight.

It is necessary that the previous (A) or (A') component and glass fiber which becomes conjugated strand by drawing means, which extrudes and conjugates the above-mentioned resin and glass fiber, and thereafter which is severed be adjusted to be the pellet of 2-20 mm in length. In this case, the length of the glass fiber in this pellet is substantially equal to that of the pellet. Mechanical and impact strengths become inferior when the length of this pellet is below 2 mm and classifications, dispersions of material and inferiorities of engagement easily occur in extrusion when the length of this pellet exceeds 20 mm.

Propylene homopolymer or propylene-ethylene copolymer whose MI (230 °C, 2.16kgf) is 3-20g / 10 minutes, 6-15g / 10 minutes is rather preferable, is used as the previous (B) component. The same component as the previous (A) or (A') component can be used as this propylene-ethylene copolymer. Sufficient capacity like strength or others as the reinforcing member can not sometimes be acquired because of a lowering strength, an inferiority of molding and an inferiority of an appearance when MI is less than 3g / 10 minutes. On the other hand, when MI exceeds 20g / 10 minutes, the blow molding can not sometimes be performed because of a shortage of draw down resistance in the case of including the glass fiber as well.

Although the blow molding, of course, and the other extrusion as well are usually difficult in the MI range of the previous (B) component, molding can be improved remarkably and the blow molding can be performed by blending the above-mentioned (A) or (A') component.
Further, the light and high strength reinforcing member 3 and the bumper beam main body 2 can be obtained because the MI range in the above-mentioned (B) component can acquire high crystal one compared with polypropylene of low MI (for example, MI is 0.5g / 10 minutes) for usual blow molding.

The propylene homopolymer or the propylene-ethylene copolymer whose isotactic pentad ratio is more than 93 mol % is preferable as the above-mentioned component. Sufficient strength can not be acquired as the reinforcing member 3 when the isotactic pentad ratio is less than 93 mol %.

It is required that total amount become 100 by weight when the previous (A) or (A') component 10-70 by weight and (B) component 90-30 by weight are blended. When (A) or (A') component is less than 10 by weight, mechanical and impact strengths become inferior and when it exceeds 70 by weight, molding becomes lowered and appearance deteriorates.

It is possible to add inorganic and organic fillers like fiber reinforcement, talc, mica and glass flake except the previous glass fiber, other thermoplastic resin, lubricant, colorant, stabilizer, antioxidant, ultraviolet absorbing agent, anti-static additives, flame retardant, plasticizer, weathering agent and others to the mixture of the above-mentioned (A) or (A') component and (B) component as long as the object of this invention is damaged if necessary. Furthermore, a mixture which is dissolved and kneaded with (B) component is usually used for an addition agent.

For example, various halogen flame retardant can be mixed for the purpose of adding flame resistance property if necessary. Flame retardant auxiliary like trioxide antimony and others can be used together to increase an additional effect of flame resistance property further. Decabromodiphenyl oxide, tetrabromobisphenol A epoxy, octabromodiphenyl oxide, tertrabromobisphenol S and tetrabromobisphenol S can be listed for the above-mentioned flame retardant.

Still, the bumper beam main body 2 and the reinforcing member 3 are not limited within the above-mentioned-member. The above-mentioned-member, especially, is suitable for the reinforcing member 3 and various polypropylene and others on the market can be utilized for the bumper beam main body 2 as a grade of blow molding. Accordingly, the resin of different member may be used for the bumper beam main body 2 and the reinforcing member 3 without a limitation of the same member.

Next, manufacturing process of the bumper beam 1 in this embodiment will be explained.

The reinforcing member 3 is molded by supplying blow molding machine with dry blend composed of, for example, pellet (A) or (A') component composited by the glass fiber whose length (2-20mm) is practically the same as that of the above-mentioned pellet and (B) component composed of resin.

This premolded reinforcing member 3 is attached to a die 10. This reinforcing member 3 is attached to the die 10 through the stays 4 on both ends or through appropriate brackets.

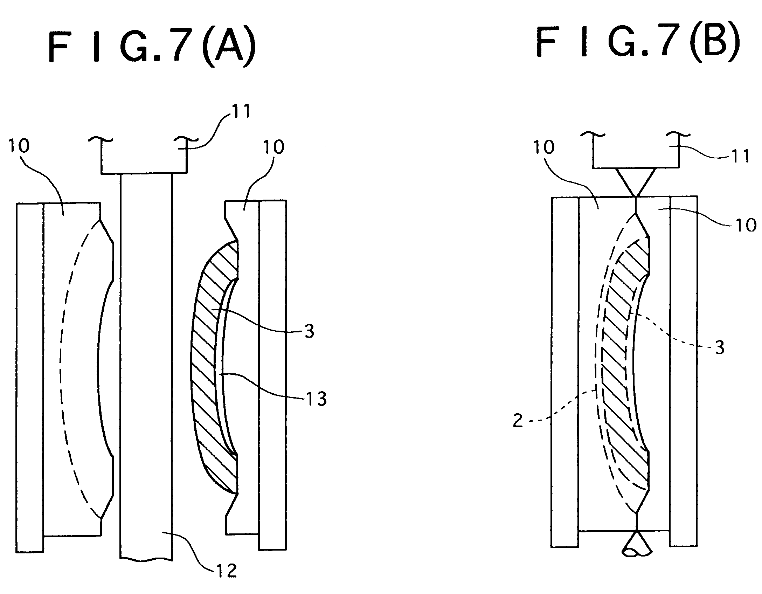

Next, as shown in Fig. 7 (A), the resin melted in an extruder or others (not shown) forms parison 12 through a die head 11 and thereafter this parison 12 is sent between the dies 10. As shown in Fig. 7 (B), the dies 10 are clamped by a mold clamping machine (not shown) and thereafter the blow molding of the bumper beam main body 2 is blow-molded. On this occasion, the reinforcing member 3 is inserted into the parison 12, with which the resin shown in Fig. 7 (A) enters into a clearance gap 13 between the reinforcing member 3 and the dies 10, whereby the bumper beam main body 2 covers each surrounding (the front side 3A, the back side 3B, the inclined-sides 3C, 3D).

Because the reinforcing member 3 is formed across almost the whole length of the bumper beam main body 2 and the ends touch the stays 4 for fitting to the automobile, not only the bumper beam main body 2 made of resin but also the stays 4 can receive load added to the bumper beam 1 by a collision or others through the reinforcing member 3, whereby a mechanical strength of the whole bumper beam 1 can be improved.

A length of a front and rear direction of the reinforcing member 3 is almost the same as that of the bumper beam main body 2, whereby a strength against a shock caused by the automobile collision or others from the front and rear direction of the bumper beam 1 can be improved.

Further, because the surroundings of the reinforcing member 3 are covered by the bumper beam main body 2, whereby they are integrated, a movement of the reinforcing member 3 is held down by the bumper beam main body 2 when the reinforcing member 3 is pushed out by adding a load to the reinforcing member 3, for example, and the bumper beam main body 2 and the reinforcing member 3 are reinforcing each other, whereby the strength of the whole bumper beam 1 can be improved.

Because of the improvement of strength by the above specific characteristics of the construction, it is not necessary to thicken a wall thickness for an improvement of strength conventionally and the strength which makes a car pass 5 miles / hour pole test can be obtained with lightening a weight of the whole bumper beam 1.

The specific characteristics of the resin itself are light, strong in mechanical strength, durability and impact properties and the bumper beam main body 2 and the reinforcing member 3 can be excellent in a dimensional stability when the resin illustrated in the above embodiment is used, whereby the lightening and high strength of the bumper beam 1 can be accomplished further with the specific characteristics of the construction.

Additionally, the draw down resistance, a mold process ability like a deep blowing, cost performance and others are excellent in the blow molding.

Because PP impregnation GF matte (polypropylene impregnation glass fiber reinforcing matte) used for a conventional bumper beam usually arranges glass fiber with long fibers orderly inside resin, whereby a strength was improved, performance deteriorates in the case of recycling and it is difficult to put it in practice. Namely, when the resin is recycled, bwrr and others usually occurring in molding are collected and molded by a crusher into pellet, which was melted, kneaded and molded in an extruder by an injection molding and a blow molding, however, the long fibers are arranged disorderly by the knead of this extruder and the performance of the strength and others deteriorates more than when the fibers are arranged orderly.

Conversely, in the bumper beam molding of this invention, usual glass fiber is not included in deformation and others and therefore it is excellent in withdrawal and recycling.

Further, pellet containing glass fiber can be composed by impregnating into glass roving with the resin and the reinforcing member 3 can be molded by melt and knead of the blow molding machine once, whereby a damage of glass contained into the inside of the reinforcing member 3 and a strength deterioration can be prevented.

### [Experiment Example I]

Next, experiment 1 performed to ensure the effect of this invention will be explained.

This experiment 1 investigated effects of a weight and a pole test of the bumper beam 1 in the previous embodiment and bumper beams 60, 70, 80 and 90 whose constructions are different from those of the previous embodiment. The quality of material in both each embodiment and the control example is common in order to ensure constructional differences.

A bumper beam 60 (Control Example 1) shown in Fig. 8 is a conventional bumper beam which does not include a reinforcing member as the foregoing description. A construction of a bumper beam 70 (Control Example 2) shown in Fig. 9 is that a longitudinal length of a reinforcing member 72, which is shorter than that of a bumper beam body 71, does not reach stays 4. A bumper bean 80 (Control Example 3) shown in Fig. 10 is that a dimension long the longitudinal direction of the car in a reinforcing member 82 is shorter than that in a bumper beam body 80. Further, a bumper beam 90 (Control Example 4) shown in Fig. 11 is that rear ends of a reinforcing member are exposed from a bumper beam body 91 and a bump absorber is added.

This experimental effect is shown in Table 1. MI (melt index) in this specification is a measured value under the condition in which polypropylene is 230 °C, 2.16 kgf and polyethylene is 190 °C, 2.16 kgf.

A component of a complex ratio consisting of 40 wt% of propylene-ethylene copolymer involving 10 wt% of maleic anhydride modified polypropylene 0.5 wt% and 60 wt% of the glass fiber was used as the previous (A') component as the reinforcing member A diameter of the glass fiber was 13 µ m and a length of the pellet (glass fiber) was 10 mm. This (A') component 30 wt% and a pellet component of polypropylene 70 wt% whose MI was 8g / 10 minutes and isotactic pentad ratio is 98 mol % were supplied into the extruding blow molding machine and thereby the reinforcing member shown in Figure was obtained. Next, this reinforcing member was inserted into the die and the resin composing of polypropylene 70 wt% whose MI is 0.5g / 10 minutes, HDPE (high density polyetylene) 20 wt% whose is 0.04g / 10 minutes, and talc 10 wt% was used for the bumper beam body 2, 64, 71, 81 and 91, whereby the bumper beam was molded by the blow molding.

**[Table 1]**

| | Construction | Weight (kg) | 5.0 miles/hr Pole Test | | 2.5 miles/hr Pendulum Test | | 5.0 miles/hr Pendulum Test | |
|---|---|---|---|---|---|---|---|---|
| | | | Maximum Deformation | Fracture | Maximum Deformation | Fracture | Maximum Deformation | Fracture |
| Ex. Example 1* | ① + ② - 1 | 7.5 | 55 mm | None | | | | |
| Ref. Example 1* | ① | 7.2 | 100 mm< | Fractured | 25 mm | None | 50 mm | None |
| Ref. Example 2 | ① + ② - 2 | 7.0 | 100 mm< | Fractured | | | | |
| Ref. Example 3 | ① + ② - 3 | 9.3 | 52 mm | None | | | | |
| Ref. Example 4 | ① + ② - 4 + ③ | 7.5 | 100 mm< | Fractured | | | | |

| | | | | | | | | |
|---|---|---|---|---|---|---|---|---|
| * Ex. Example is Experimental Example. Ref. Example is Reference Example. Note 1: ① Synthetic resin bumper beam ② Reinforcing member ③ Bump absorber Note 2: The acceptable standard of 5.0 miles/hr Pole Test, 2.5 miles/hr Pendulum Test and 5.0 miles/hr Pendulum Test is less then 60 mm of deformity. | | | | | | | | |

A comparison of Experiment Example 1 and Control Example I (no reinforcing member) shows that Experiment Example 1 improves approximately twice as many mechanical strengths as Control Example 1 by devicing the insert construction of the reinforcing member 3 according to this invention even without any differences of the weight (used resin quantity) because Experiment Example 1 has as half deforming quantity as Control Example 1 and there is no damage on the bumper beam 1 in 5 miles / hour pole test.

Further, Control Example 1 passed each pendulum test of 2.5 miles / hour and 5 miles / hour, whereby it is found out that 5 miles / hour pole test requires higher strength than the corresponding pendulum test and if it passes 5 miles / hour pole test like Experimental Example 1 of this invention, it can pass the corresponding pendulum test.

On the other hand, a comparison of Experiment Example 1 and Control Example 2 shows that a strength deteriorates even if the reinforcing member 72 is inserted, without the reinforcing member 72 extending to the stays 4. A comparison of Experiment Example 1 and Control Example 3 shows that Control Example 3 can not acquire the same strength as Experiment Example 1 if the thickness of the resin does not become thick, that is the weight does not increase when a dimension along the longitudinal direction of the car in the reinforcing member 82 is shorter than that in the bumper beam main body 81.

A comparison of Experiment Example 1 and Control Example 4 shows the strength deteriorates if the surroundings of the reinforcing member 92 are prevented from being exposed by covered with the bumper beam main body 91, even if the bump absorber 93 is added.

According to this invention, it is proved that a lightening of the bumper beam 1 and an improvement of the mechanical strength can be accomplished and the bumper beam 1 can become excellent in various specific characteristics like durability, impact properties or others.

### [Experiment Example II]

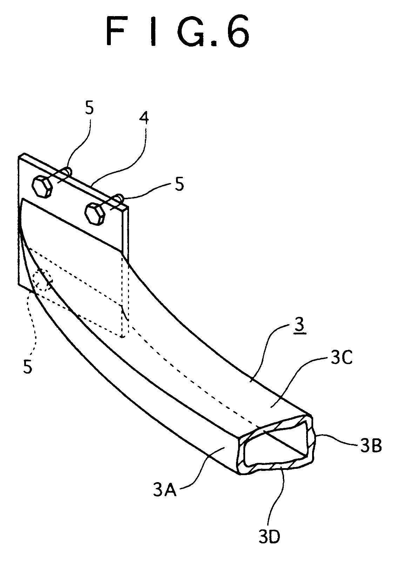

Next, an experiment example which was performed to select appropriate member for the reinforcing member 3 inserted into the inside of the bumper beam 1 like the previous embodiment will be explained. These experiment examples are that a compression test was performed by using the construction of the bumper beam 1 shown in Fig. 1 and Fig. 6 and modifying the member, the weight and others of the body 2 and the reinforcing member 3.

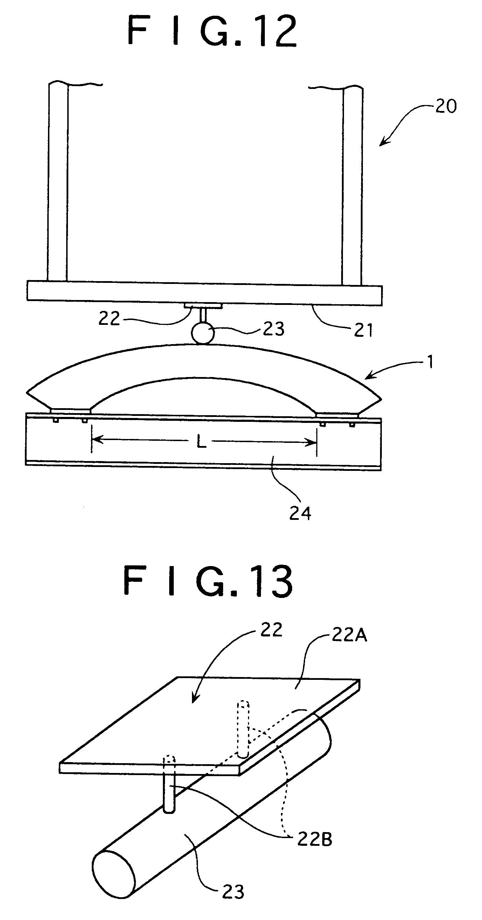

An apparatus shown in Fig. 12 and Fig. 13 was used for a compression test apparatus.

Namely, the compression test apparatus 20, as shown in Fig. 12, is composed of a general compression test device which impresses predetermined voltage by predetermined speed and a compression pole 23 is fixed through a pole fixture 22 in the center of a compressing face 21 under this compression test apparatus 20. This compression pole 23 consists of a pole whose outer diameter is 7 inches and whose length is predetermined and can be utilized for a so-called compression test of 7 inches' outer diameter. The pole fixture 22 consists of a plate body 22A and two axis 22B.

The compression (hydrostatic) test conforms to JIS K6271.

The bumper beam 1 is attached to a mount 24 comprising H shape cross section steel and the compression pole 23 abuts on the middle of a longitudinal axis and compresses below by the compression test apparatus 20.

When a work for the test is that a temperature of the bumper beam 1 is 19 °C, compression speed is 60 mm / minute, and allowable deforming quantity is 40 mm, absorption energy quantity is measured. Demand absorption energy in this bumper beam 1 is 5550 kg · cm.

Compositions and experimental effects of the reinforcing member 3 are shown in Table 2 concerning about Experiment Examples 1 to 8 performed by using the previous compression test apparatus 20 with changing an order of the material and weight (by weight) of the reinforcing member 3.

In this case, polypropylene market grade EX833-9 for a bumper beam [Blockpolypropylene 70 wt% whose MI is 1.0g / 10 minutes, high density polyethylene 20 wt% whose MI is less than 0.01g / 10 minutes, talc (average grain diameter is 1.5 µ m, average aspect ratio 15) 10 wt%] produced by IDEMITSU PETROCHEMICAL CO., LTD. was used.

A component of a composition ratio consisting of 40 wt% of the propylene homopolymer or the proplylene-ethlene copolymer and 60 wt% of the glass fiber for (A) component or (A') component. A diameter of the glass fiber is 13 µ m and a length of the pellet (glass fiber) is 10 mm at this time.

PP-1 to PP-7 in the table indicate respectively the proplylene homopolymer or the propylene-ethylene copolymer and these differences are that MI (g / 10 minutes) and the isotactic pentad ratio are changed.

### Reference Example

The compositions and experimental effects are shown similarly in Table 2 in the case of using the resin of the same form as this embodiment and different specific characters from this embodiment as Reference Examples 1 to 11 and adding various inorganic filler upon necessity.

Talc whose average grain diameter is 1.7 µ m, mica using each grain form of 325 mesh cut products and chopped glass fiber whose diameter is 13 µ m were used for the inorganic filler for the reference example in the table.

Kneading is necessary for the inorganic filler's blend in each reference example in advance and materials are produced based on the next kneading method.

Kneading inorganic grain forms like talc, mica and others into the proplylene homopolymer or the proplylene-ethylene copolymer was performed under the condition of kneading temperature 220 °C, orifice opening degree 40 %, rotor rotating speed 900 rpm by using a kneader 2FCM produced by Kobe Steel Inc..

Kneading the chopped glass fiber into the propylene homopolymer or the propylene-ethylene copolymer was performed under the condition of kneading temperature 220 °C and screw rotating speed 300 rpm by using a Kneader TEM35 produced by Toshiba Machine Inc. and the supply of the chopped glass fiber is side feed.

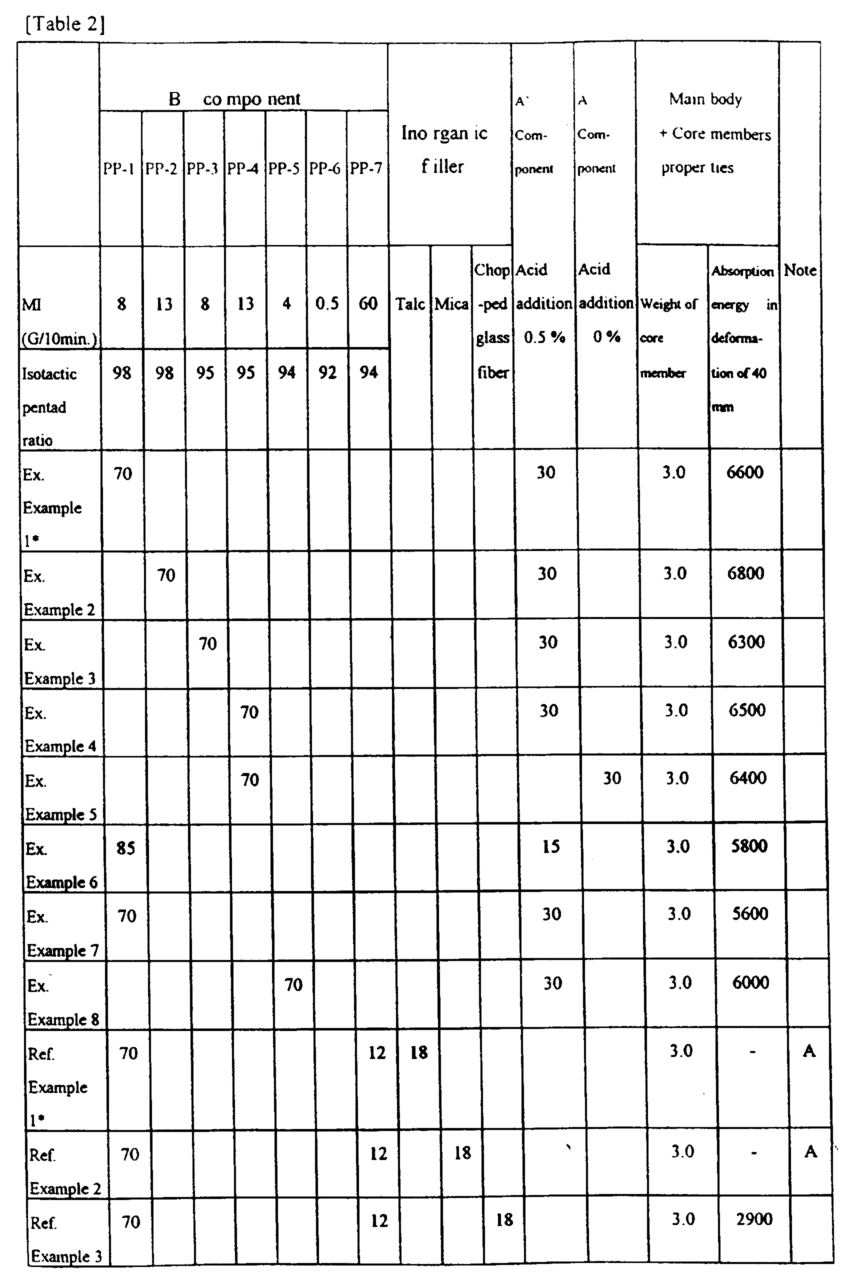

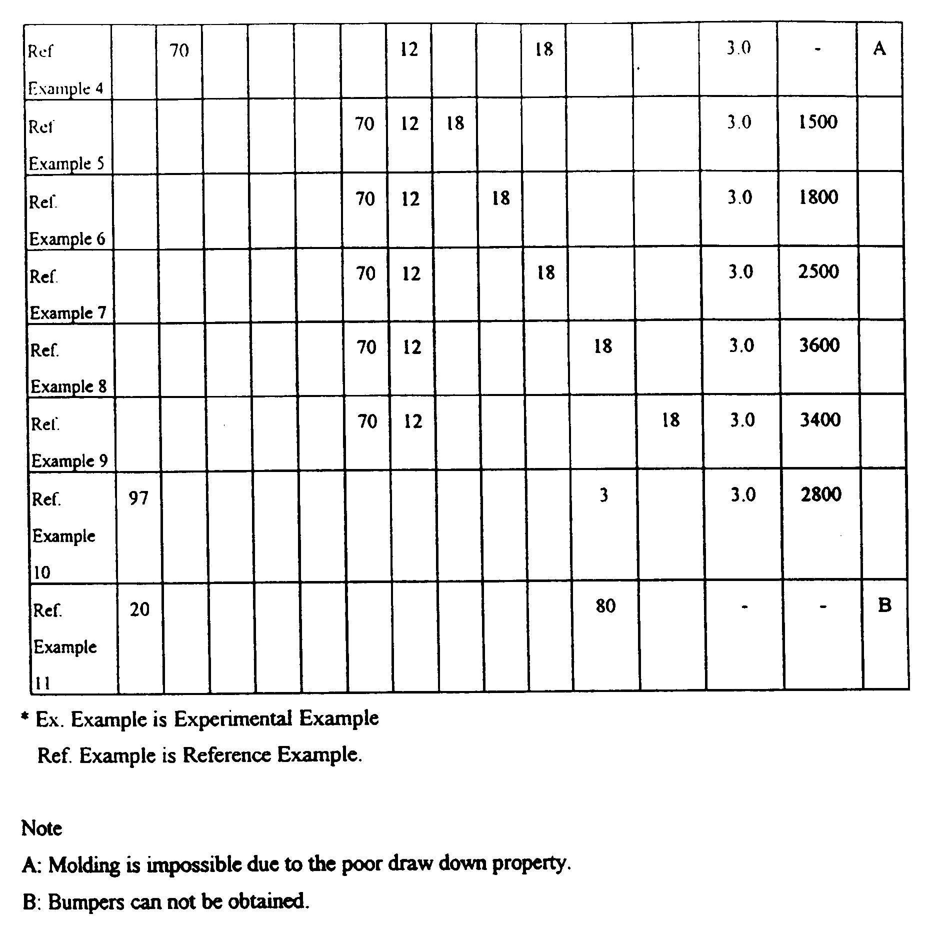

According to Table 2, it is found out that in Experiment Examples 1 to 8, the absorption energy in 40 mm deformation is satisfied with the demand value (5500kg · cm) On the other hand, it is found out that the absorption energy is not satisfied with the demand value or the blow molding is impossible in Contract Examples 1 to 11.

The comparisons between Experiment Examples 1 and 2 and between Experiment Examples 3 and 4 prove that the absorption energy is large when MI is large provided the isotactic pentad ratios are the same. On the other hand, the comparisons between Experiment Example 1 and 3 and between Experiment Example 3 and 4 prove that the absorption energy is large when the isotactic pentad ratio is high provided MIs are the same.

The comparison between Experiment Examples 4 and 5 proves that the absorption energy of (A') component is larger than that of (A) component provided (B) components are the same. Accordingly, (A') is a more preferable composition.

The comparison between Experiment Examples 1 and 6 proves that a mix ratio of (A') component and (B) component whose (A') component is more than (B) component has more absorption energy.

Further, the comparison between Experiment Examples 1 and 7 proves that the absorption energy is large when the weight of the reinforcing member 3 is large provided the mix ratio of (A') component and (B) component is the same.

Experiment Example 8 proves that the demand absorption energy is satisfied sufficiently even if MI is 4g / 10 minutes and the isotactic pentad ratio is 94 mol %.

Reference Examples 1 to 7 prove that the blow molding or the demand absorption energy is not satisfied without (A) or (A') component.

Contract Examples 8 and 9 prove that the demand value can not be satisfied when quantity of (A) or (A') component is little even if the absorption energy is improved after (A) or (A') component is added.

Further, Contract Examples 10 and 11 prove that the sufficient absorption energy value can not be accomplished or the molding is impossible when (A') and (B) component is beyond the predetermined scope (10-70 by weight or 90-30 by weight) provided (A') and (B) components are used.

Reference Examples 5 to 7 prove that the chopped glass fiber has the largest absorption energy value and next is mica and talc in due order as the inorganic filler though the sufficient absorption energy can not be acquired after the inorganic filler is added.

Although particular preferred embodiments of the invention have been disclosed in detail for illustrative purposes, it will be recognized that variations or modifications of the disclosed apparatus, including the rearrangement of part, lie within the scope of the present invention.

For example, the members of the bumper beam main body 2 and the reinforcing member 3 of this invention are not intended to be limited to the above-described embodiments, and various changes may be made therein without departing from the spirit of the present invention. The members of the bumper beam main body 2 and the reinforcing member 3 may be the same or the resin of different members is used for each member.

Method of compositioning the glass fiber is not intended to be limited to the method of compounding into the inside of the pellet like the previous embodiment and the method of supplying the molding machine with the composition in which the glass fiber and each resin component are melted and kneaded.

When the reinforcing member 3 is fixed to the die 10, in the case of holding the die 10 by arranging plural brackets, the resin does not enter around the brackets, and thereby some parts of the reinforcing member 3 are not covered with the bumper beam main body 2 and even though there are some portions of the reinforcing member 3 exposing without being covered with the bumper beam main body 2, the strength does not matter because the reinforcing member 3 except these uncovered parts is covered with the bumper beam main body 2. Accordingly, in this embodiment to cover around the reinforcing member 3 with the bumper beam main body includes not only the case of covering the whole surrounding completely but also the case of possessing some uncoated portions (the exposing portions of the reinforcing member 3) by brackets and others.

Further, the forms of the bumper beam main body 2 and the reinforcing member 3 is not intended to be limited to the above-described embodiments and various changes may be made therein according to the forms and others of the bumper. However, it is preferable to form the upper frame portion 2B and the lower frame portion 2C of the reinforcing member 3 and the bumper beam main body 2 into hollow collar states to balance the lightening and strength.

This invention is preferable especially for the bumper beam for a rear bumper of an automobile, however it can be used for the bumper beam for the front. Automobiles to which the bumper beam of this invention is fixed are not limited to the general automobiles like and are applicable to trucks, buses and various automobiles provided with the bumper.

The reinforcing member of the previous embodiment is applicable not only to the bumper beam constructed like the previous embodiment but also to related products of other automobiles like a seat back and others, further to container and other fields.

As explained above, according to the blow molding bumper beam in this invention, the reinforcing member is inserted into the bumper beam main body and a dimension of the reinforcing member and the inserted construction are established appropriately (the dimension along the longitudinal axis of the reinforcing member is longer than the space between the fitting members of the bumper beam main body and is extended over the space between the fitting members, a dimension along the longitudinal direction of the car, crossing the longitudinal axis of the reinforcing member is almost the same as that of the bumper beam main body, and the surroundings of the reinforcing member are covered with the bumper beam main body.), whereby the mechanical strength of the bumper beam can be improved without thickening the wall thickness. Accordingly, there is effect which the bumper beam in this invention can accomplish the lightening and the improvement of the strength in a well-balanced way and can pass 5 miles / hour pole test.

There is also an effect which the reinforcing member whose cross section severed perpendicularly to the longitudinal axis is formed in the almost rectangular frame state is arranged between the upper section and the lower section of the bumper beam main body, with the upper frame portion and the lower frame portion whose cross sections severed perpendicularly to the longitudinal axis are in almost rectangular frame states in the upper and lower position of the reinforcing member of the bumper beam main body, whereby the lightening can be improved further because each member is formed in the hollow collar state.

Further, there is an effect which the reinforcing member is molded of the mixture with the pellet (A or A' component) conjugated with the glass fiber composed like the above and the resin (B component), whereby dispersion properties of the glass fiber is high and the damage of the glass fiber does not happen easily even if productivity becomes high, the reinforcing member is light and its mechanical strength is high, and the durabilities and impact properties are excellent. The specific properties like lightening and high strength can be acquired in blow molding products used with this reinforcing member.

## Claims

1. A bumper beam comprising a rigid bumper beam body (2) and a bumper beam reinforcing member (3) provided inside the bumper beam body, the bumper beam body having a longitudinally extending section with fitting members (5) provided at opposite ends thereof for joining the blow molded bumper beam to an automobile body and the bumper beam reinforcing member contacts the fitting members and extends along the length of the bumper beam body longiduinally extending section for a distance greater than the distance between the fitting members; characterised in that the reinforcing member (3) is completely surrounded by the bumper beam body (2) for substantially all of the length of the reinforcing member (3); and in that the bumper beam body is formed by blow molding.

2. A bumper beam according to claim 1, wherein the bumper beam body (2) and the reinforcing member (3) are closely attached in the middle part of the beam, the bumper beam body (2) being longer than the reinforcing member (3), so that the bumper beam body (2) and reinforcing member (3) are spaced apart at the ends of the beam.

3. A bumper beam according to claim 1 or claim 2, wherein the bumper beam body (2) has an upper portion (2B) and a lower portion (2C) provided at opposite sides of the reinforcing member (3) the reinforcing member and longitudinally extending section upper and lower portions have a substantially rectangular cross section in a plane perpendicular to the longitudinal axis of the longitudinally extending section.

4. A bumper beam according to any one of the preceding claims, wherein the reinforcing member (3) has a substantially trapezoidal cross section in a plane perpendicular to the longitudinal axis of the longitudinal extending section.

5. A bumper beam according to any one of the preceding claims, wherein the reinforcing member (3) is molded out of resin reinforced with glass fibre.

6. A bumper beam according to claim 5, wherein the glass fibre is reinforced into the reinforcing member (2) by using a pellet containing the glass fibre having a length substantially the same as that of the pellet and the resin.

7. A bumper beam according to claim 5 or claim 6, wherein the reinforcing member (3) is obtained by molding a mixture consisting of (A) 10 - 70 % by weight of a pellet which consists of 20 - 60 wt% of a propylene homopolymer or a propylene-ethylene copolymer and 80 - 40 wt % glass fibre and whose length is 2 - 20 mm and is substantially the same as the length of the glass fibre and (B) 90 - 30% by weight of a propylene homopolymer or a propylene-ethylene copolymer.

8. A bumper beam according to claim 5 or claim 6, wherein the reinforcing member is obtained by molding a mixture of 10 -70 % by weight of a pellet (A') consisting of a mixture of 1 - 10 parts by weight of an acid modified polyolefin having an acid addition weight of 0.1 - 10 wt% and 100 parts by weight of a mixture consisting of 20 - 60 wt% of a propylene homopolymer, or a propylene-ethylene copolymer, and 80 - 40 wt% of glass fibre, and (B) 90 - 30% by weight of a propylene homopolymer or a propylene-ethylene copolymer.

9. A bumper beam according to claim 7, wherein the propylene homopolymer or propylene-ethylene copolymer of component (A) has a melt index [230°C,2.16kgf] of more than 300 g/10 minutes.

10. A bumper beam according to claim 8, wherein the propylene homopolymer or propylene-ethylene copolymer of component (A') has a melt index [230°C,2.16kgf] of more than 300 g/10 minutes.

11. A bumper beam according to claim 7, wherein the propylene homopolymer or propylene-ethylene copolymer of component (B) has a melt index [230°C,2.16kgf] of 3 ∼ 20g/10 minutes.

12. A bumper beam according to claim 8, wherein the propylene homopolymer or propylene-ethylene copolymer of component (B) has a melt index [230°C,2.16kgf] of 3 ∼ 20 g/10 minutes.

## Patentansprüche

1. Ein Stoßfänger, bestehend aus einem starren Stoßfängerkörper (2) und einem Stoßfängerverstärkungsglied (3), das innerhalb des Stoßfängerkörpers angeordnet ist, wobei der Stoßfängerkörper einen sich der Länge nach erstreckenden Abschnitt aufweist, der mit Anbaugliedern (5) an seinen zwei einander gegenüberliegenden Enden ausgerüstet ist, um den blasgeformten Stoßfänger an die Kraftfahrzeugkarosserie anzubauen, und das Stoßfängerverstärkungsglied die Anbauglieder berührt und sich entlang dem sich der Länge nach erstreckenden Abschnitt des Stoßfängerkörpers auf eine Länge erstreckt, die größer ist als der Abstand zwischen den Anbaugliedern; dadurch gekennzeichnet, daß das Verstärkungsglied (3) über im wesentlichen die gesamte Länge des Verstärkungsgliedes (3) vollständig vom Stoßfängerkörper (2) umgeben ist; und daß der Stoßfängerkörper durch Blasformen gefertigt ist.

2. Ein Stoßfänger gemäß Anspruch 1, in dem der Stoßfängerkörper (2) und das Verstärkungsglied (3) im Mittelteil des Stoßfängers eng aneinander befestigt sind, wobei der Stoßfängerkörper (2) länger ist als das Verstärkungsglied (3), so daß der Stoßfängerkörper (2) und das Verstärkungsglied (3) an den Enden des Stoßfängers voneinander beabstandet sind.

3. Ein Stoßfänger gemäß Anspruch 1 oder Anspruch 2, in dem der Stoßfängerkörper (2) einen oberen Teil (2B) und einen unteren Teil (2C) an den gegenüberliegenden Seiten des Verstärkungsglieds (3) aufweist, das Verstärkungsglied und der obere und der untere Teil des sich der Länge nach erstreckenden Abschnitts in einer Ebene, die senkrecht auf der Längsachse des sich der Länge nach erstreckenden Abschnitts steht, einen im wesentlichen rechteckigen Querschnitt haben.

4. Ein Stoßfänger gemäß einem beliebigen der vorstehenden Ansprüche, in dem das Verstärkungsglied (3) in einer Ebene, die senkrecht auf der Längsachse des sich der Länge nach erstreckenden Abschnitts steht, einen im wesentlichen trapezförmigen Querschnitt hat.

5. Ein Stoßfänger gemäß einem beliebigen der vorstehenden Ansprüche, in dem das Verstärkungsglied (3) aus glasfaserverstärktem Harz ausgeformt ist.

6. Ein Stoßfänger gemäß Anspruch 5, in dem die Glasfaser im Verstärkungsglied (2) durch Anwenden eines Pellets verstärkt wird, das die Glasfaser mit einer im wesentlichen der gleichen Länge wie das Pellet und das Harz enthält.

7. Ein Stoßfänger gemäß Anspruch 5 oder 6, in dem das Verstärkungsglied (3) erzeugt wird durch Aus formen eines Gemischs bestehend aus (A) 10 - 70 Gew.% eines Pellets, das zu 20 - 60 Gew.% aus Propylen-Homopolymer oder einem Propylen-Ethylen-Copolymer, und 80 - 40 Gew.% Glasfaser besteht, deren Länge 2 - 20 mm beträgt und die im wesentlichen die gleiche ist wie die Länge der Glasfaser, und (B) 90 - 30 Gew.% eines Propylen-Homopolymers oder eines Propylen-Ethylen-Copolymers.

8. Ein Stoßfänger gemäß Anspruch 5 oder Anspruch 6, in dem das Verstärkungsglied erzeugt wird durch Ausformen eines Gemischs von 10 - 70 Gew.% eines Pellets (A') bestehend aus einem Gemisch von 1 - 10 Gewichtsteilen eines Säure-modifizierten Polyolefins mit einem Säurezusatzgewicht von 0.1 - 10 Gew.% und 100 Gewichtsteilen eines Gemischs bestehend aus 20 - 60 Gew.% eines Propylen-Homopolymers, oder einem Propylen-Ethylen-Compolymer und 80 - 40 Gew.% Glasfaser, und (B) 90 - 30 Gew.% eines Propylen-Homopolymers oder eines Polypropylen-Ethylen-Copolymers.

9. Ein Stoßfänger gemäß Anspruch 7, in dem das Propylen-Homopolymer oder Propylen-Ethylen-Copolymer des Bestandteils (A) einen Schmelzindex [230°C, 2,16 kp] von über 300 g/10 Minuten aufweist.

10. Ein Stoßfänger gemäß Anspruch 8, in dem das Propylen-Homopolymer oder Propylen-Ethylen-Copolymer des Bestandteils (A') einen Schmelzindex [230°C, 2,16 kp] von über 300 g/10 Minuten aufweist.

11. Ein Stoßfänger gemäß Anspruch 7, in dem das Propylen-Homopolymer oder Propylen-Ethylen-Copolymer des Bestandteils (B) einen Schmelzindex [230°C, 2,16 kp] von 3 - 20g/10 Minuten aufweist.

12. Ein Stoßfänger gemäß Anspruch 8, in dem das Propylen-Homopolymer oder Propylen-Ethylen-Copolymer des Bestandteils (B) einen Schmelzindex [230°C, 2,16 kp] von 3 - 20 g/10 Minuten aufweist.

## Revendications

1. Pare-chocs comprenant un corps principal de pare-chocs rigide (2) et un élément de renforcement du pare-chocs (3) inséré à l'intérieur du corps principal du pare-chocs, le corps principal du pare-chocs ayant une section s'étendant longitudinalement pourvue d'éléments de fixation (5) situés à ses extrémités opposées pour fixer le pare-chocs obtenu par extrusion-soufflage à la carrosserie d'une automobile et dans lequel l'élément de renforcement du pare-chocs est en contact avec les éléments de fixation et s'étend sur toute la longueur de la section s'étendant longitudinalement du corps principal du pare-chocs sur une distance supérieure à la distance entre les éléments de fixation ; caractérisé en ce que l'élément de renforcement (3) est complètement entouré par le corps principal du pare-chocs (2) sur substantiellement toute la longueur de l'élément de renforcement (3) ; et en ce que le corps principal du pare-chocs est formé par un procédé d'extrusion-soufflage.

2. Pare-chocs selon la revendication 1, dans lequel le corps principal du pare-chocs (2) et l'élément de renforcement (3) sont étroitement joints dans la partie centrale du pare-chocs, le corps principal du pare-chocs (2) étant plus long que l'élément de renforcement (3), de façon que le corps principal du pare-chocs (2) et l'élément de renforcement (3) soient séparés aux extrémités du pare-chocs.

3. Pare-chocs selon la revendication 1 ou la revendication 2, dans lequel le corps principal du pare-chocs (2) a une partie supérieure (2B) et une partie inférieure (2C) situées sur des côtés opposés de l'élément de renforcement (3), l'élément de renforcement et les parties supérieure et inférieure de la section s'étendant longitudinalement ayant une section transversale essentiellement rectangulaire dans un plan perpendiculaire à l'axe longitudinal de la section s'étendant longitudinalement.

4. Pare-chocs selon l'une quelconque des revendications précédentes, dans lequel l'élément de renforcement (3) présente une section transversale essentiellement trapézoïdale dans un plan perpendiculaire à l'axe longitudinal de la section s'étendant longitudinalement.

5. Pare-chocs selon l'une quelconque des revendications précédentes, dans lequel l'élément de renforcement (3) est moulé à partir d'une résine renforcée par des fibres de verre.

6. Pare-chocs selon la revendication 5, dans lequel la libre de verre est incorporée, à titre de renfort, dans l'élément de renforcement (3) au moyen d'une pastille contenant la fibre de verre, dont la longueur est essentiellement la même que celle de la pastille, et la résine.

7. Pare-chocs selon la revendication 5 ou la revendication 6, dans lequel l'élément de renforcement (3) est obtenu en moulant un mélange comprenant (A) 10 à 70 % en poids d'une pastille comportant 20 à 60 % en poids d'un homopolymère de propylène ou d'un copolymère propylène-éthylène et 80 à 40 % en poids de fibres de verre et dont la longueur est de 2 à 20 mm et est globalement la même que la longueur de la libre de verre, et (B) 90 à 30 % en poids d'un homopolymère de propylène ou d'un copolymère propylène-éthylène.

8. Pare-chocs selon la revendication 5 ou la revendication 6, dans lequel l'élément de renforcement est obtenu en moulant un mélange comprenant de 10 à 70 % en poids d'une pastille (A') consistant en un mélange de 1 à 10 parties en poids d'une polyoléfine modifiée par un acide, avec une addition de 0,1 à 10 % en poids d'acide, et de 100 parties en poids d'un mélange comprenant 20 à 60 % en poids d'un homopolymère de propylène ou d'un copolymère propylène-éthylène et 80 à 40 % en poids de fibres de verre, et (a) 90 à 30 % en poids d'un homopolymère de propylène ou d'un copolymère propylène-éthylène.

9. Pare-chocs selon la revendication 7, dans lequel l'homopolymère de propylène ou le copolymère propylène-éthylène du composé (A) a un indice de viscosité à l'état fondu [230°C, 2,16 kgf] supérieur à 300 g/10 minutes.

10. Pare-chocs selon la revendication 8, dans lequel l'homopolymère de propylène ou le copolymère propylène-éthylène du composé (A') a un indice de viscosité à l'état fondu [230°C, 2,16 kgf] supérieur à 300 g/10 minutes.

11. Pare-chocs selon la revendication 7, dans lequel l'homopolymère de propylène ou le copolymère propylène-éthylène du composé (B) a un indice de viscosité à l'état fondu [230°C, 2,16 kgf] de 3 à 20 g/10 minutes.

12. Pare-chocs selon la revendication 8, dans lequel l'homopolymère de propylène ou le copolymère propylène-éthylène du composé (B) a un indice de viscosité à l'état fondu [230°C, 2,16 kgf] de 3 à 20 g/10 minutes.
